# EUROPEAN PATENT APPLICATION

(11) **EP 4 592 684 A1**
(43) Date of publication of application: **30.07.2025**
(21) Application number: 25153840.1
(22) Date of filing: 24.01.2025
(51) Int. Cl.: G01N 35/00, G01N 35/02, G01N 35/04

(54) **SAMPLE ANALYZER**

(30) Priority: 26.01.2024 CN 202410122228
(71) Applicant: Shenzhen New Industries Biomedical Engineering Co., Ltd., Shenzhen, Guangdong 518122 (CN)
(72) Inventor: RAO, Wei, Shenzhen, 518122 (CN); YIN, Li, Shenzhen, 518122 (CN); ZHU, Liang, Shenzhen, 518122 (CN); HE, Jiebiao, Shenzhen, 518122 (CN); KANG, Lele, Shenzhen, 518122 (CN); LIN, Ronghua, Shenzhen, 518122 (CN); LIU, Yuhuai, Shenzhen, 518122 (CN); CHEN, Xiaotao, Shenzhen, 518122 (CN); ZHOU, Jiamao, Shenzhen, 518122 (CN)
(74) Representative: Metida

(57) **Abstract**

A sample analyzer includes a reaction wheel (20), a first reagent container storage mechanism (31), a second reagent container storage mechanism (32), a reagent container buffering mechanism (51), and a reagent container transfer mechanism (52). **In** the present invention, a center line (200) is defined by extending from a first rotation center (315) to a second rotation center (325), and the reagent container buffering mechanism (51) and the reaction wheel (20) are respectively located on two sides of the center line (200). The reagent container transfer mechanism (52) is configured to transfer reagent containers (40) between the first reagent container storage mechanism (31) and the reagent container buffering mechanism (51), and/or between the second reagent container storage mechanism (32) and the reagent container buffering mechanism (51).

## Description

### TECHNICAL FIELD

The present invention relates to the technical field of analytical instruments, and in particular to a sample analyzer.

### BACKGROUND

Biochemical analyzers, immune analyzers and cell analyzers, all of which are sample analyzers, are used for the quantitative and qualitative detection and analysis of samples.

During the continuous detection and analysis of samples by a sample analyzer, if reagents are manually added, it not only affects the analyzing efficiency of the analyzer but also requires the operator to wait for the analyzer to enter the state where manually adding reagent addition is allowable. Therefore, how to reinject reagents online in real time without downtime of the analyzer based on the remaining available reagent amount in the reagent container storage mechanism to ensure the effective supply of reagents has become a crucial problem to be solved for achieving efficient sample analyzing with a sample analyzer.

### SUMMARY

The main objective of the present invention is to provide a sample analyzer which may solve, or at least partially alleviate the aforementioned problems.

In some embodiments, the present invention provides a sample analyzer, including:
a reaction wheel arranged on a support frame;
a first reagent container storage mechanism and a second reagent container storage mechanism, wherein a center line is defined by extending from a first rotation center of the first reagent container storage mechanism to a second rotation center of the second reagent container storage mechanism,
a reagent container buffering mechanism configured for carrying reagent containers and located between the first reagent container storage mechanism and the second reagent container storage mechanism, wherein a third rotation center of the reagent container buffering mechanism and a fourth rotation center of the reaction wheel are respectively located on two sides of the center line; and
a reagent container transfer mechanism configured for transferring reagent containers between the first reagent container storage mechanism and the reagent container buffering mechanism, and/or between the second reagent container storage mechanism and the reagent container buffering mechanism.

In some embodiments, a transfer path of the reagent container transfer mechanism is parallel to the center line, the first reagent container storage mechanism has at least one first pick-and-place position, the second reagent container storage mechanism has at least one second pick-and-place position, and the reagent container buffering mechanism has at least one third pick-and-place position, and wherein the at least one first pick-and-place position, the at least one second pick-and-place position and the at least one third pick-and-place position are all located beneath the transfer path.

In some embodiments, the first reagent container storage mechanism includes a first inner storage ring and a first outer storage ring, the first inner storage ring is located on an inner side of the first outer storage ring, the at least one first pick-and-place position includes a first inner pick-and-place position configured on the first inner storage ring corresponding to the transfer path, and a first outer pick-and-place position configured on the first outer storage ring corresponding to the transfer path;
the second reagent container storage mechanism includes a second inner storage ring and a second outer storage ring, the second inner storage ring is located on an inner side of the second outer storage ring, the at least one second pick-and-place position includes a second inner pick-and-place position configured on the second inner storage ring corresponding to the transfer path, and a second outer pick-and-place position configured on the second outer storage ring corresponding to the transfer path;
the reagent container buffering mechanism includes an inner buffering ring and an outer buffering ring, the inner buffering ring is located on an inner side of the outer buffering ring, the at least one third pick-and-place position includes a third inner pick-and-place position configured on the inner buffering ring corresponding to the transfer path, and a third outer pick-and-place position configured on the outer buffering ring corresponding to the transfer path; and
the reagent container transfer mechanism is configured for transferring a reagent container between one of the first inner pick-and-place position and the first outer pick-and-place position and one of the third inner pick-and-place position and the third outer pick-and-place position, and/or configured for transferring a reagent container between one of the second inner pick-and-place position and the second outer pick-and-place position and one of the third inner pick-and-place position and the third outer pick-and-place position.

In some embodiments, a first included angle is defined between a line extending through the first inner pick-and-place position and the first rotation center and another line extending through the first outer pick-and-place position and the first rotation center;
a second included angle is defined between a line extending through the second inner pick-and-place position and the second rotation center and another line extending through the second outer pick-and-place position and the second rotation center; and
a third included angle is defined between a line extending through the third inner pick-and-place position and the third rotation center and another line extending through the third outer pick-and-place position and the third rotation center.

In some embodiments, the first inner storage ring is provided with a plurality of first inner carrying positions for carrying reagent containers along a circumferential direction centered on the first rotation center, the first inner storage ring rotates and moves the plurality of first inner carrying positions to pass through the first inner pick-and-place position sequentially, the first outer storage ring is provided with a plurality of first outer carrying positions for carrying reagent containers along the circumferential direction centered on the first rotation center, and the first outer storage ring rotates and moves the plurality of first outer carrying positions to pass through the first outer pick-and-place position sequentially;
the second inner storage ring is provided with a plurality of second inner carrying positions for carrying reagent containers along a circumferential direction centered on the second rotation center, the second inner storage ring rotates and moves the plurality of second inner carrying positions to pass through the second inner pick-and-place position sequentially, the second outer storage ring is provided with a plurality of second outer carrying positions for carrying reagent containers along the circumferential direction centered on the second rotation center, and the second outer storage ring rotates and moves the plurality of second outer carrying positions to pass through the second outer pick-and-place position sequentially;
the inner buffering ring is provided with a plurality of third inner carrying positions for holding reagent containers along a circumferential direction centered on the third rotation center, the inner buffering ring rotates and moves the plurality of third inner carrying positions to pass through the third inner pick-and-place position sequentially, the outer buffering ring is provided with a plurality of third outer carrying positions for carrying reagent containers along the circumferential direction centered on the third rotation center, and the outer buffering ring rotates and moves the plurality of third outer carrying positions to pass through the third outer pick-and-place position sequentially; and
wherein the reagent container transfer mechanism is configured for transferring one of the reagent containers at a time between:
the first inner pick-and-place position and the third inner pick-and-place position;
the first outer pick-and-place position and the third inner pick-and-place position;
the first inner pick-and-place position and the third outer pick-and-place position;
the first outer pick-and-place position and the third outer pick-and-place position;
the second inner pick-and-place position and the third inner pick-and-place position;
the second outer pick-and-place position and the third inner pick-and-place position;
the second inner pick-and-place position and the third outer pick-and-place position; or
the second outer pick-and-place position and the third outer pick-and-place position.

In some embodiments, the at least one third pick-and-place position includes a third left pick-and-place position located adjacent to the first reagent container storage mechanism and a third right pick-and-place position located adjacent to the second reagent container storage mechanism, and the reagent container transfer mechanism is configured for transferring reagent containers between the at least one first pick-and-place position and the third left pick-and-place position, and between the at least one second pick-and-place position and the third right pick-and-place position.

In some embodiments, a vertical symmetry line is formed passing through the fourth rotation center and perpendicular to the center line, the third rotation center is offset from the vertical symmetry line and is positioned adjacent to the first reagent container storage mechanism or adjacent to the second reagent container storage mechanism.

In some embodiments, an intersection point of the vertical symmetry line and the center line is located at a midpoint of the center line.

In some embodiments, the reagent container transfer mechanism includes:
a pick-and-place device configured for picking up and placing reagent containers;
a rotation driving device configured for driving the pick-and-place device to rotate;
a lifting driving device configured for driving the pick-and-place device to move up and down; and
a horizontally driving device configured for driving the pick-and-place device to move along the transfer path between the at least one first pick-and-place position and the at least one third pick-and-place position, and between the at least one second pick-and-place position and the at least one third pick-and-place position.

In some embodiments, the pick-and-place device is a gripper; or
the pick-and-place device is a suction nozzle, which is offset from a rotational axis of the rotation driving device.

In some embodiments, the first reagent container storage mechanism is provided with a plurality of first carrying positions for carrying reagent containers along a circumferential direction centered on the first rotation center, and the first reagent container storage mechanism rotates and moves the plurality of first carrying positions to pass through the at least one first pick-and-place position sequentially;
the second reagent container storage mechanism is provided with a plurality of second carrying positions for holding reagent containers along a circumferential direction centered on the second rotation center, and the second reagent container storage mechanism rotates and moves the plurality of second carrying positions to pass through the at least one second pick-and-place position sequentially;
the reagent container buffering mechanism is provided with a plurality of third carrying positions for carrying reagent containers along a circumferential direction centered on the third rotation center, and the reagent container buffering mechanism rotates and moves the plurality of third carrying positions to pass through the at least one third pick-and-place position sequentially; and
the reagent container transfer mechanism is configured for transferring one of the reagent containers at a time
between the at least one first pick-and-place position and the at least one third pick-and-place position; or
between the at least one second pick-and-place position and the at least one third pick-and-place position.

In some embodiments, a horizontal symmetry line is formed passing through the fourth rotation center and parallel to the center line;
the sample analyzer further includes a sample delivery mechanism for conveying sample containers; and
the center line and the sample delivery mechanism are respectively located on two sides of the horizontal symmetry line.

In some embodiments, the sample analyzer further includes a recycling box, wherein the recycling box has a recycling opening is located beneath the transfer path.

In some embodiments, the recycling opening is located between the first reagent container storage mechanism and the reagent container buffering mechanism; or
the recycling opening is located between the second reagent container storage mechanism and the reagent container buffering mechanism.

In some embodiments, the reaction wheel is configured to carry a plurality of reaction vessels and includes a first reagent dispensing position, a second reagent dispensing position, a third reagent dispensing position, and a fourth reagent dispensing position;
the first reagent container storage mechanism is provided with a first reagent aspirating position and a second reagent aspirating position;
the second reagent container storage mechanism is provided with a third reagent aspirating position and a fourth reagent aspirating position;
the sample analyzer further includes:
a first reagent injection mechanism including a first reagent needle and a second reagent needle that are operated independently, wherein the first reagent needle is configured for drawing a reagent from a corresponding reagent container at the first reagent aspirating position, transferring the reagent along the first line and injecting the reagent to a corresponding reaction vessel at the first reagent dispensing position independently from action of the second reagent needle, and the second reagent needle is configured for drawing a reagent from a corresponding reagent container at the second reagent aspirating position, transferring the reagent along the second line and injecting the reagent to a corresponding reaction vessel at the second reagent dispensing position independently from action of the first reagent needle; and
a second reagent injection mechanism including a third reagent needle and a fourth reagent needle that are operated independently, wherein the third reagent needle is configured for drawing a reagent from a corresponding reagent container at the third reagent aspirating position, transferring the reagent along the third line and injecting the reagent to a corresponding reaction vessel at the third reagent dispensing position independently from action of the fourth reagent needle, and the fourth reagent needle is configured for drawing a reagent from a corresponding reagent container at the fourth reagent aspirating position, transferring the reagent along the fourth line and injecting the reagent to a corresponding reaction vessel at the fourth reagent dispensing position independently from action of the third reagent needle.

In some embodiments, the first reagent container storage mechanism includes a first inner storage ring and a first outer storage ring, the first inner storage ring is located on an inner side of the first outer storage ring, and the first inner storage ring and the first outer storage ring rotate independently of each other;
the first reagent aspirating position is located on a first inner rotation path of the first inner storage ring, and the second reagent aspirating position is located on a first outer rotation path of the first outer storage ring; or the first reagent aspirating position is located on the first outer rotation path of the first outer storage ring, and the second reagent aspirating position is located on the first inner rotation path of the first inner storage ring;
the second reagent container storage mechanism includes a second inner storage ring and a second outer storage ring, the second inner storage ring is located on an inner side of the second outer storage ring, and the second inner storage ring and the second outer storage ring rotate independently of each other; and
the third reagent aspirating position is located on a second inner rotation path of the second inner storage ring, and the fourth reagent aspirating position is located on a second outer rotation path of the second outer storage ring; or the third reagent aspirating position is located on the second outer rotation path of the second outer storage ring, and the fourth reagent aspirating position is located on the second inner rotation path of the second inner storage ring.

In some embodiments, the reaction wheel includes an inner reaction ring and an outer reaction ring, the inner reaction ring is located on an inner side of the outer reaction ring, and the inner reaction ring and the outer reaction ring rotate independently of each other;
the first reagent dispensing position is located on a fourth outer rotation path of the outer reaction ring, and the second reagent dispensing position is located on a fourth inner rotation path of the inner reaction ring; or the first reagent dispensing position is located on the fourth inner rotation path of the inner reaction ring, and the second reagent dispensing position is located on the fourth outer rotation path of the outer reaction ring; and
the third reagent dispensing position is located on the fourth inner rotation path of the inner reaction ring, and the fourth reagent dispensing position is located on the fourth outer rotation path of the outer reaction ring.

In the present invention, a center line is defined by extending from a first rotation center to a second rotation center, and the reagent container buffering mechanism and the reaction wheel are respectively located on two sides of the center line. The reagent container transfer mechanism is configured to transfer reagent containers between the first reagent container storage mechanism and the reagent container buffering mechanism, and/or between the second reagent container storage mechanism and the reagent container buffering mechanism. Thus, the reagent container buffering mechanism, the reaction wheel, the first reagent container storage mechanism, and the second reagent container storage mechanism are all arranged within a limited space, and it achieves reinjection of reagent containers during operation of the sample analyzer without downtime.

### BRIEF DESCRIPTION OF THE DRAWINGS

The accompanying drawings described herein are provided to facilitate the understanding of the present invention and constitute a part of the present invention. The illustrative embodiments and their descriptions are intended to explain the present invention and should not be construed as undue limitation thereto. In the drawings:
FIG. 1 is an overall schematic structural view of a sample analyzer according to one embodiment of the present invention;
FIG. 2 is an overall schematic structural view of the sample analyzer according to another embodiment of the present invention;
FIG. 3 is a schematic structural view of an online reinjection module of sample containers according to one embodiment of the present invention; and
FIG. 4 is a partial schematic structural view of a first reagent injection mechanism according to one embodiment of the present invention.

### DESCRIPTION OF THE EMBODIMENTS

It should be noted that, where there is no conflict, the embodiments and features of the embodiments in the present invention can be combined with each other. The following detailed description of the present invention will be made with reference to the accompanying drawings and in conjunction with the embodiments.

It should be noted that the terms used here are for describing specific embodiments only, and are not intended to limit the exemplary embodiments of the present invention. Furthermore, it should be understood that when the terms "comprising" and/or "including" are used in this description, they indicate the presence of features, steps, operations, devices, components, and/or their combinations.

Unless otherwise specifically stated, the relative arrangement, numerical expressions, and values of the components and steps described in these embodiments do not limit the scope of the present invention. Additionally, it should be understood that for the sake of convenience in description, the sizes of the parts shown in the drawings are not drawn to scale. Technologies, methods, and devices known to those skilled in the art of the relevant field may not be discussed in detail, but where appropriate, these technologies, methods, and devices should be regarded as part of the enabling invention. In all the examples shown and discussed here, any specific values should be interpreted as merely exemplary, and not as limitations. Therefore, other examples of the exemplary embodiments may have different values. It should be noted that similar reference numerals and letters in the following drawings represent similar items. Therefore, once an item is defined in one drawing, it does not need to be further discussed in subsequent drawings.

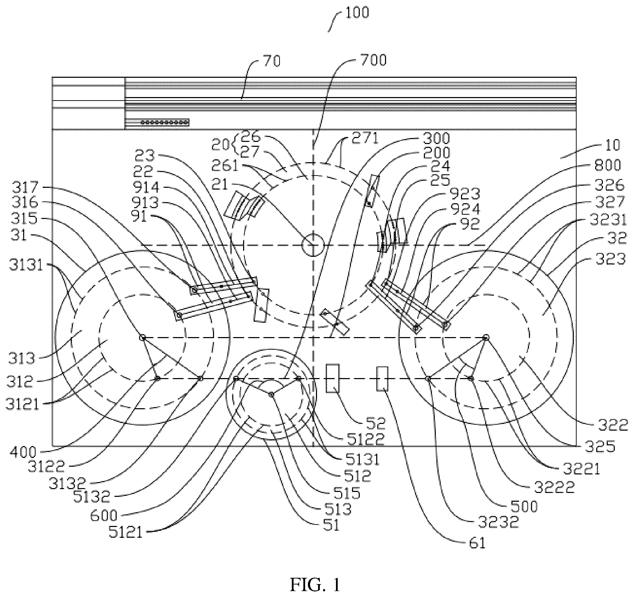

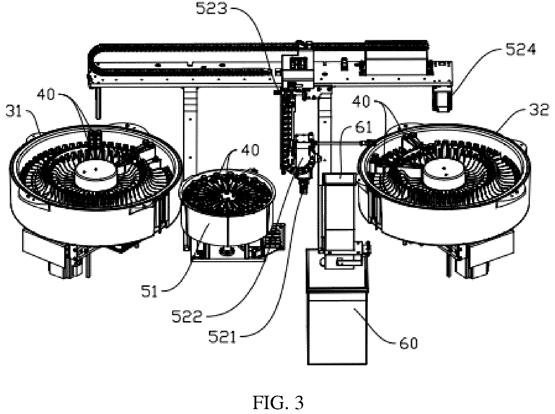

Referring to FIG. 1 to FIG. 3, the present invention provides a sample analyzer 100, which includes a reaction wheel 20 arranged on a support frame 10, and a first reagent container storage mechanism 31 and a second reagent container storage mechanism 32 located outside the reaction wheel 20.

The first reagent container storage mechanism 31 and the second reagent container storage mechanism 32 each carry reagent containers 40, which contain reagents used for testing the sample.

The first reagent container storage mechanism 31 is configured to carry various types of reagent containers, and the second reagent container storage mechanism 32 is also configured to carry various types of reagent containers.

Further, the reagents in the reagent containers carried by the first reagent container storage mechanism 31 may be the same as or different from those in the reagent containers carried by the second reagent container storage mechanism 32.

The sample analyzer 100 further includes a reagent container buffering mechanism 51. The reagent container buffering mechanism 51 is configured to carry reagent containers 40 and is located between the first reagent container storage mechanism 31 and the second reagent container storage mechanism 32.

The sample analyzer 100 further includes a reagent container transfer mechanism 52. The reagent container transfer mechanism 52 can transfer reagent containers 40 between the first reagent container storage mechanism 31 and the reagent container buffering mechanism 51, and/or between the second reagent container storage mechanism 32 and the reagent container buffering mechanism 51, thus achieving reinjection of reagents into the first reagent container storage mechanisms 31 and/or the second reagent container storage mechanisms 32 during operation of the simple analyzer without downtime.

Furthermore, a center line 200 is defined by extending from the first rotation center 315 of the first reagent container storage mechanism 31 to the second rotation center 325 of the second reagent container storage mechanism 32.

The third rotation center 515 of the reagent container buffering mechanism 51 and the fourth rotation center 21 of the reaction wheel 20 are respectively located on two sides of the center line 200.

Since the reaction wheel 20 needs to rotate to perform different testing operations at different working positions, both the first reagent container storage mechanism 31 and the second reagent container storage mechanism 32 need to rotate to aspirate the reagents.

Thus, after the reaction wheel 20, the first reagent container storage mechanism 31, and the second reagent container storage mechanism 32 have been installed on the support frame 10, the available space between the first reagent container storage mechanisms 31 and the second reagent container storage mechanisms 32 is limited, which make it impossible to install the reagent container buffering mechanism 51 on the center line 200 rotatable about the third rotation center 515.

Therefore, in the present invention, the reagent container transfer mechanism 52 is configured to transfer reagent containers 40 between the first reagent container storage mechanism 31 and the reagent container buffering mechanism 51, and/or between the second reagent container storage mechanism 32 and the reagent container buffering mechanism 51, thus achieving reinjection of reagent containers 40 into both the first reagent container storage mechanisms 31 and the second reagent container storage mechanisms 32 within the limited space.

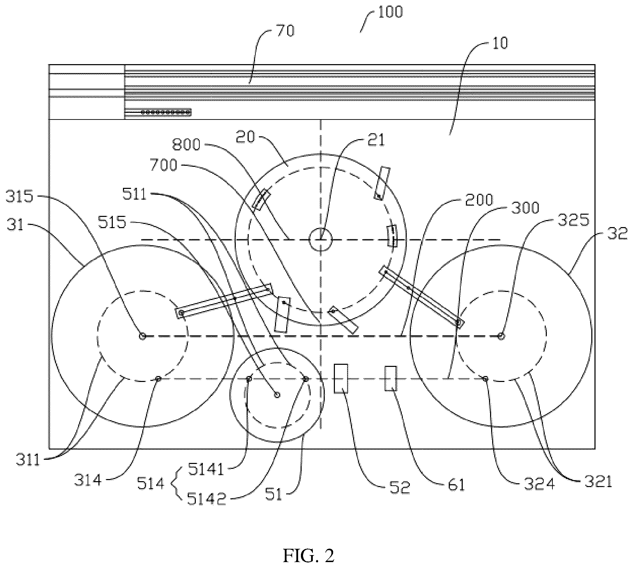

Referring to FIG. 2, in the first embodiment, the first reagent container storage mechanism 31 has a single-ring structure and a first pick-and-place position 314 corresponding to the transfer path 300 of the reagent container transfer mechanism 52. The first reagent container storage mechanism 31 rotates around the first rotation center 315, which drives the reagent containers 40 carried to pass through the first pick-and-place position 314.

The second reagent container storage mechanism 32 has a single-ring structure and a second pick-and-place position 324 corresponding to the transfer path 300. The second reagent container storage mechanism 32 rotates around the second rotation center 325, which drives the carried reagent containers 40 to pass through the second pick-and-place position 324.

The reagent container buffering mechanism 51 has a single-ring structure and a third pick-and-place position 514 corresponding to the transfer path 300. The reagent container buffering mechanism 51 rotates around the third rotation center 515, which drives the reagent containers 40 carried to pass through the third pick-and-place position 514.

The first pick-and-place position 314, the second pick-and-place position 324, and the third pick-and-place position 514 are located beneath the transfer path 300, so that the reagent container transfer mechanism 52 can transfer reagent containers 40 between the first pick-and-place position 314 and the third pick-and-place position 514, and/or between the second pick-and-place position 324 and the third pick-and-place position 514.

Furthermore, for the first reagent container storage mechanism 31 with a single-ring structure, a first tangent point where the transfer path 300 tangentially intersects the first reagent container storage mechanism 31 is the first pick-and-place position 314. Alternatively, two first intersection points where the transfer path 300 intersects the first reagent container storage mechanism 31 are the first pick-and-place positions 314, namely, the first pick-and-place position 314 includes a first left pick-and-place position and a first right pick-and-place position. The first left pick-and-place position is the first intersection point along the transfer path 300 away from the second reagent container storage mechanism 32, while the first right pick-and-place position is the first intersection point along the transfer path 300 adjacent to the second reagent container storage mechanism 32.

For the second reagent container storage mechanism 32 with a single-ring structure, a second tangent point where the transfer path 300 tangentially intersects the second reagent container storage mechanism 32 is the second pick-and-place position 324. Alternatively, two second intersection points where the transfer path 300 intersects the second reagent container storage mechanism 32 are the second pick-and-place positions 324, namely, the second pick-and-place position 324 includes a second left pick-and-place position and a second right pick-and-place position. The second left pick-and-place position is the second intersection point along the transfer path 300 adjacent to the first reagent container storage mechanism 31, while the second right pick-and-place position is the second intersection point along the transfer path 300 away from the first reagent container storage mechanism 31.

For the reagent container buffering mechanism 51 with a single-ring structure, a third tangent point where the transfer path 300 tangentially intersects the reagent container buffering mechanism 51 is the third pick-and-place position 514. Alternatively, two third intersection points where the transfer path 300 intersects the reagent container buffering mechanism 51 are the third pick-and-place positions 514, namely, the third pick-and-place position 514 includes a third left pick-and-place position 5141 and a third right pick-and-place position 5142. The third left pick-and-place position 5141 is the third intersection point along the transfer path 300 adjacent to the first reagent container storage mechanism 31, while the third right pick-and-place position 5142 is the third intersection point along the transfer path 300 adjacent to the second reagent container storage mechanism 32.

In a first embodiment, the reagent container transfer mechanism 52 can transfer the reagent containers 40 between the first pick-and-place position 314 in the tangential state and the third left pick-and-place position 5141, or between the first left or right pick-and-place position in the intersection state and the third left pick-and-place position 5141.

In a second embodiment, the reagent container transfer mechanism 52 can transfer the reagent containers 40 between the first pick-and-place position 314 in the tangential state and the third right pick-and-place position 5142, or between the first left or right pick-and-place position in the intersection state and the third right pick-and-place position 5142.

In a third embodiment, the reagent container transfer mechanism 52 can transfer the reagent containers 40 between the second pick-and-place position 324 in the tangential state and the third left pick-and-place position 5141, or between the second left or right pick-and-place position in the intersection state and the third left pick-and-place position 5141.

In a fourth embodiment, the reagent container transfer mechanism 52 can transfer the reagent containers 40 between the second pick-and-place position 324 in the tangential state and the third right pick-and-place position 5142, or between the second left or right pick-and-place position in the intersection state and the third right pick-and-place position 5142.

In a fifth embodiment, the reagent container transfer mechanism 52 can transfer the reagent containers 40 between the first pick-and-place position 314 in the tangential state or the first left or right pick-and-place position in the intersection state, and the second pick-and-place position 324 in the tangential state or the second left or right pick-and-place position in the intersection state.

In some embodiments, in case that the transfer path 300 intersects the first reagent container storage mechanism 31 and the reagent container buffering mechanism 51, the reagent container transfer mechanism 52 transfers the reagent containers 40 between the first right pick-and-place position and the third left pick-and-place position 5141. In this way, the transfer path of the reagent container transfer mechanism 52 between the first reagent container storage mechanism 31 and the reagent container buffering mechanism 51 is shortened, improving the transfer efficiency of the reagent containers 40. In addition, the time period that the reagent containers 40 is exposed to the external environment in a low temperature is reduced, which minimizes the impact of the external environmental temperature on the temperature of the reagent received in the reagent containers 40 upon transferring.

In case that the transfer path 300 intersects the second reagent container storage mechanism 32 and the reagent container buffering mechanism 51, the reagent container transfer mechanism 52 transfers the reagent containers 40 between the second left pick-and-place position and the third right pick-and-place position 5142. In this way, the transfer path of the reagent container transfer mechanism 52 between the second reagent container storage mechanism 32 and the reagent container buffering mechanism 51 is shortened, improving the transfer efficiency of the reagent containers 40. In addition, the time period that the reagent containers 40 is exposed to the external environment in a low-temperature is reduced, which minimizes the impact of the external environmental temperature on the temperature of the reagent received in the reagent containers 40 upon transferring.

Furthermore, the first reagent container storage mechanism 31 is configured with a plurality of first carrying positions 311 along the circumferential direction around the first rotation center 315 to carry the reagent containers 40. The first reagent container storage mechanism 31 rotates so that the plurality of first carrying positions 311 pass through the first pick-and-place position 314 in sequence. The first pick-and-place position 314 can be the first pick-and-place position 314 in the tangential state, the first left pick-and-place position in the intersection state or the first right pick-and-place position in the intersection state.

For the first reagent container storage mechanism 31 with a single-ring structure, the first reagent container storage mechanism 31 is configured with a plurality of first carrying positions 311 along the first rotation path.

The first pick-and-place position 314 is located on the first rotation path. The first reagent container storage mechanism 31 rotates so that the target first carrying position 311 moves to the first pick-and-place position 314. At this point, the reagent container transfer mechanism 52 can place a target reagent container 40 at the target first carrying position 311 located at the first pick-and-place position 314, or the reagent container transfer mechanism 52 can take and transfer the reagent container 40 from the target first carrying position 311 located at the first pick-and-place position 314.

The second reagent container storage mechanism 32 is configured with a plurality of second carrying positions 321 along the circumferential direction around the second rotation center 325 to carry the reagent containers 40. The second reagent container storage mechanism 32 rotates so that the plurality of second carrying positions 321 pass through the second pick-and-place position 324 in sequence. The second pick-and-place position 324 can be the second pick-and-place position 324 in the tangential state, the second left in the intersection state or the second right pick-and-place position in the intersection state.

For the second reagent container storage mechanism 32 with a single-ring structure, the second reagent container storage mechanism 32 is configured with a plurality of second carrying positions 321 along the second rotation path.

The second pick-and-place position 324 is located on the second rotation path, and the second reagent container storage mechanism 32 rotates so that the target second carrying position 321 moves to the second pick-and-place position 324. At this point, the reagent container transfer mechanism 52 can place a target reagent container 40 at the target second carrying position 321 located at the second pick-and-place position 324, or the reagent container transfer mechanism 52 can take and transfer the reagent container 40 from the target second carrying position 321 located at the second pick-and-place position 324.

The reagent container buffering mechanism 51 is configured with a plurality of third carrying positions 511 along the circumferential direction around the third rotation center 515 to carry the reagent containers 40. The reagent container buffering mechanism 51 rotates so that the plurality of third carrying positions 511 pass through the third pick-and-place position 514 in sequence. The third pick-and-place position 514 can be either the third pick-and-place position 514 in the tangential state, the third left pick-and-place position 5141 in the intersection state or the third right pick-and-place position 5142 in the intersection state.

For the single-ring structure of the reagent container buffering mechanism 51, the reagent container buffering mechanism 51 is configured with a plurality of third carrying positions 511 along the third rotation path.

The third pick-and-place position 514 is located on the third rotation path. The reagent container buffering mechanism 51 rotates so that the target third carrying position 511 moves to the third pick-and-place position 514. At this point, the reagent container transfer mechanism 52 can place a target reagent container 40 at the target third carrying position 511 located at the third pick-and-place position 514, or the reagent container transfer mechanism 52 can take and transfer the reagent container 40 from the target third carrying position 511 located at the third pick-and-place position 514.

Further referring to FIG. 1, in another embodiment, the first reagent container storage mechanism 31 is a dual-ring structure, including a first inner storage ring 312 and a first outer storage ring 313. The first inner storage ring 312 is located on an inner side of the first outer storage ring 313.

The first inner storage ring 312 has a first inner pick-and-place position 3122 corresponding to the transfer path 300. The first inner storage ring 312 rotates around the first rotation center 315, driving the carried reagent containers 40 to pass through the first inner pick-and-place position 3122 in sequence.

The first outer storage ring 313 has a first outer pick-and-place position 3132 corresponding to the transfer path 300. The first outer storage ring 313 rotates around the first rotation center 315, driving the carried reagent containers 40 to pass through the first outer pick-and-place position 3132 in sequence.

The second reagent container storage mechanism 32 is a dual-ring structure, including a second inner storage ring 322 and a second outer storage ring 323. The second inner storage ring 322 is located on an inner side of the second outer storage ring 323.

The second inner storage ring 322 has a second inner pick-and-place position 3222 corresponding to the transfer path 300. The second inner storage ring 322 rotates around the second rotation center 325, driving the carried reagent containers 40 to pass through the second inner pick-and-place position 3222 in sequence.

The second outer storage ring 323 has a second outer pick-and-place position 3232 corresponding to the transfer path 300. The second outer storage ring 323 rotates around the second rotation center 325, driving the carried reagent containers 40 to pass through the second outer pick-and-place position 3232 in sequence.

The reagent container buffering mechanism 51 is a dual-ring structure, including an inner buffering ring 512 and an outer buffering ring 513. The inner buffering ring 512 is located on an inner side of the outer buffering ring 513.

The inner buffering ring 512 has a third inner pick-and-place position 5122 corresponding to the transfer path 300. The inner buffering ring 512 rotates around the third rotation center 515, driving the carried reagent containers 40 to pass through the third inner pick-and-place position 5122.

The outer buffering ring 513 has a third outer pick-and-place position 5132 corresponding to the transfer path 300. The outer buffering ring 513 rotates around the third rotation center 515, driving the carried reagent containers 40 to pass through the third outer pick-and-place position 5132.

The first inner pick-and-place position 3122, the first outer pick-and-place position 3132, the second inner pick-and-place position 3222, the second outer pick-and-place position 3232, the third inner pick-and-place position 5122, and the third outer pick-and-place position 5132 are all located beneath the transfer path 300. The reagent container transfer mechanism 52 is configured for transferring one of the reagent containers 40 at a time between: the first inner pick-and-place position 3122 and the third inner pick-and-place position 5122; the first outer pick-and-place position 3132 and the third inner pick-and-place position 5122; the first inner pick-and-place position 3122 and the third outer pick-and-place position 5132; the first outer pick-and-place position 3132 and the third outer pick-and-place position 5132; the second inner pick-and-place position 3222 and the third inner pick-and-place position 5122; the second outer pick-and-place position 3232 and the third inner pick-and-place position 5122; the second inner pick-and-place position 3222 and the third outer pick-and-place position 5132; or the second outer pick-and-place position 3232 and the third outer pick-and-place position 5132.

In other embodiments, the first reagent container storage mechanism 31 can be a single-ring structure, a dual-ring structure, or a multi-ring structure with at least three rings. Similarly, the second reagent container storage mechanism 32 can be a single-ring structure, a dual-ring structure, or a multi-ring structure with at least three rings. The reagent container buffering mechanism 51 can be a single-ring structure, a dual-ring structure, or a multi-ring structure with at least three rings, which will not be described in detail here.

In one embodiment, the transfer path 300 is a single straight segment and is parallel to the center line 200, so that the reagent container transfer mechanism 52 can transfer reagent containers between the first reagent container storage mechanism 31, the second reagent container storage mechanism 32, and the reagent container buffering mechanism 51 more efficiently.

It should be understood that, the transfer path 300 of the reagent container transfer mechanism 52 may be parallel to the center line 200, intersect with the center line 200, or intersect with the extension of the center line 200.

In some embodiments, the transfer path 300 is parallel to the center line 200, allowing the reagent container transfer mechanism 52 to transfer reagent containers 40 efficiently with the shortest transfer distance between the first reagent container storage mechanism 31 and the reagent container buffering mechanism 51, and/or between the second reagent container storage mechanism 32 and the reagent container buffering mechanism 51.

In another embodiment, the transfer path 300 includes at least two interconnected transfer sub-paths, with at least one sub-transfer path being not collinear with the adjacent sub-transfer path.

Specifically, in case that the first reagent container storage mechanism 31, the second reagent container storage mechanism 32, and the reagent container buffering mechanism 51 are all of single-ring structure, the at least two sub-transfer paths in this embodiment include a sub-transfer path between the third pick-and-place position 514 and a sub-transfer path between the first pick-and-place position 314 and the second pick-and-place position 324.

The first pick-and-place position 314 may be the first tangent point or any one of the first intersection points. The second pick-and-place position 324 may be the second tangent point or any one of the second intersection points. The third pick-and-place position 514 may be the third tangent point or any one of the third intersection points.

In case that the first reagent container storage mechanism 31, the second reagent container storage mechanism 32, and the reagent container buffering mechanism 51 are all of dual-ring structure, the at least two sub-transfer paths include a sub-transfer path between the third inner pick-and-place position 5122 and any of the first inner pick-and-place position 3122, the first outer pick-and-place position 3132, the second inner pick-and-place position 3222, the second outer pick-and-place position 3232, and the third outer pick-and-place position 5132; a sub-transfer path between the third outer pick-and-place position 5132 and any of the first inner pick-and-place position 3122, the first outer pick-and-place position 3132, the second inner pick-and-place position 3222, and the second outer pick-and-place position 3232; a sub-transfer path between the first inner pick-and-place position 3122 and any of the first outer pick-and-place position 3132, the second inner pick-and-place position 3222, and the second outer pick-and-place position 3232; a sub-transfer path between the first outer pick-and-place position 3132 and any of the second inner pick-and-place position 3222, and the second outer pick-and-place position 3232; and a sub-transfer path between the second inner pick-and-place position 3222 and the second outer pick-and-place position 3232.

The first inner pick-and-place position 3122 may be the first tangent point or any one of the first inner intersection points. The first outer pick-and-place position 3132 may be any one of the first outer intersection points. The second inner pick-and-place position 3222 may be the second tangent point or any one of the second inner intersection points. The second outer pick-and-place position 3232 may be any one of the second outer intersection points. The third inner pick-and-place position 5122 may be the third tangent point or any one of the third inner intersection points. The third outer pick-and-place position 5132 may be any one of the third outer intersection points.

Furthermore, in case of the first reagent container storage mechanism 31 with dual-ring structure, a first included angle 400 is formed between a line extending through the first inner pick-and-place position 3122 and the first rotation center 315 and another line extending through the first outer pick-and-place position 3132 and the first rotation center 315.

Specifically, the first tangent point where the transfer path 300 is tangent to the first inner storage ring 312 is the first inner pick-and-place position 3122, or the two first inner intersection points where the transfer path 300 intersects the first inner storage ring 312 are both the first inner pick-and-place positions 3122.

The two first outer intersection points where the transfer path 300 intersects the first outer storage ring 313 are both the first outer pick-and-place positions 3132.

The first included angle 400 may be an included angle between a line extending through any one of the first outer intersection points and the first rotation center 315 and another line extending through the first tangent point and the first rotation center 315, alternatively the first included angle 400 may also be an included angle between a line extending through any one of the first outer intersection points and the first rotation center 315 and any one of the first inner intersection points and the first rotation center 315.

In some embodiments, along the length direction of the transfer path 300, the first inner pick-and-place position 3122 is located on the first inner intersection point close to the second reagent container storage mechanism 32, and the first outer pick-and-place position 3132 is located on the first outer intersection point close to the second reagent container storage mechanism 32, so that the reagent container transfer mechanism 52 can transfer the reagent containers 40 between the first inner pick-and-place position 3122 or the first outer pick-and-place position 3132 and the reagent container buffering mechanism 51 with the shortest transfer distance, thereby improving the transfer efficiency of the reagent containers 40.

For the dual-ring structure of the second reagent container storage mechanism 32, the second included angle 500 may be an included angle between a line extending through the second inner pick-and-place position 3222 and the second rotation center 325, and another line extending through the second outer pick-and-place position 3232 and the second rotation center 325.

Specifically, the second tangent point where the transfer path 300 is tangent to the second inner storage ring 322 is the second inner pick-and-place position 3222, or the two second inner intersection points where the transfer path 300 intersects the second inner storage ring 322 are both the second inner pick-and-place positions 3222.

The two second outer intersection points where the transfer path 300 intersects the second outer storage ring 323 are both the second outer pick-and-place positions 3232.

The second included angle 500 may be an included angle between a line extending through any one of the second outer intersection points and the second rotation center 325 and another line extending through the second tangent point and the second rotation center 325, alternatively the second included angle 500 may also be an included angle between a line extending through any one of the second outer intersection points and the second rotation center 325 and another line extending through any one of the second inner intersection points and the second rotation center 325.

In some embodiments, along the length direction of the transfer path 300, the second inner pick-and-place position 3222 is located on the second inner intersection point adjacent to the first reagent container storage mechanism 31, and the second outer pick-and-place position 3232 is located on the second outer intersection point adjacent to the first reagent container storage mechanism 31, so that the reagent container transfer mechanism 52 can transfer the reagent containers 40 between the second inner pick-and-place position 3222 or the second outer pick-and-place position 3232 and the reagent container buffering mechanism 51 with the shortest transfer distance, thereby improving the transfer efficiency of the reagent containers 40.

For the dual-ring structure of the reagent container buffering mechanism 51, a third included angle 600 may be an included angle between a line extending through the third inner pick-and-place position 5122 and the third rotation center 515 and another line extending through the third outer pick-and-place position 5132 and the third rotation center 515.

Specifically, the third tangent point where the transfer path 300 is tangent to the inner buffering ring 512 is the third inner pick-and-place position 5122, or the two third inner intersection points where the transfer path 300 intersects the inner buffering ring 512 are both the third inner pick-and-place positions 5122.

The two third outer intersection points where the transfer path 300 intersects the outer buffering ring 513 are both the third outer pick-and-place positions 5132.

The third included angle 600 may be an included angle between a line extending through any one of the third outer intersection points and the third rotation center 515 and another line extending through the third tangent point and the third rotation center 515, or the third included angle 600 may also be an included angle between a line extending through any one of the third outer intersection points and the third rotation center 515 and another line extending through any one of the third inner intersection points and the third rotation center 515.

Furthermore, both the first included angle 400 and the second included angle 500 are opened towards the reagent container buffering mechanism 51 and faces away from the reaction wheel 20. The third included angle 600 is opened towards the reaction wheel 20, so that the third rotation center 515 is located on a side of the transfer path 300 away from the reaction wheel 20. In this way, the reagent container buffering mechanism 51 can be integrated on the support frame 10 and located in the gap enclosed by the first reagent container storage mechanism 31, the second reagent container storage mechanism 32 and the reaction wheel 20, and the reagent container buffering mechanism 51 can be located on one side of the sample analyzer 100, which facilitates the operator to take and place the reagent container 40 in the reagent container buffering mechanism 51.

In one embodiment, along the length direction of the transfer path 300, in case that the reagent container transfer mechanism 52 transfers the reagent containers 40 between the second reagent container storage mechanism 32 and the reagent container buffering mechanism 51, the third inner pick-and-place position 5122 is located on the third inner intersection point adjacent to the second reagent container storage mechanism 32, and the third outer pick-and-place position 5132 is located on the third outer intersection point adjacent to the second reagent container storage mechanism 32, so that the reagent container transfer mechanism 52 can transfer the reagent containers 40 between the second inner pick-and-place position 3222 or the second outer pick-and-place position 3232 and the reagent container buffering mechanism 51 with the shortest transfer distance, thereby improving the transfer efficiency of the reagent containers 40.

In one embodiment, the third inner pick-and-place position 5122 and the third outer pick-and-place position 5132 are both located closer to the first reagent container storage mechanism 31 than to the second reagent container storage mechanism 32, or the third inner pick-and-place position 5122 and the third outer pick-and-place position 5132 are both located closer to the second reagent container storage mechanism 32 than to the first reagent container storage mechanism 31. This allows the reagent container buffering mechanism 51 to share a single reagent container inlet and outlet hole for the third inner pick-and-place position 5122 and the third outer pick-and-place position 5132, effectively controlling the size of the reagent container inlet and outlet hole. This helps reduce the temperature convection between the inner cavity of the reagent container buffering mechanism 51 and the external connections during the transfer of the reagent container, thereby minimizing the impact of temperature fluctuations on the reagent container stored in the buffering mechanism 51.

Along the length direction of the transfer path 300, in case that the reagent container transfer mechanism 52 transfers the reagent container 40 between the first reagent container storage mechanism 31 and the reagent container buffering mechanism 51, the third inner pick-and-place position 5122 is located on the third inner intersection point close to the first reagent container storage mechanism 31, and the third outer pick-and-place position 5132 is located on the third outer intersection point close to the first reagent container storage mechanism 31. This allows the reagent container transfer mechanism 52 to transfer the reagent container 40 between the first inner pick-and-place position 3122 or the first outer pick-and-place position 3132 and the reagent container buffering mechanism 51 with the shortest transfer distance, thereby improving the transfer efficiency of the reagent container 40.

Further, in one embodiment, the center line 200 and the third rotation center 515 are respectively located on two sides of the transfer path 300.

In another embodiment, the third rotation center 515 is directly beneath the transfer path 300, that is, viewed from a top to bottom, the third rotation center 515 coincides with the transfer path 300.

In other embodiments, the third rotation center 515 is located between the center line 200 and the transfer path 300.

Additionally, the first inner storage ring 312 is provided with a plurality of first inner carrying positions 3121 for carrying the reagent containers 40 along a circumferential direction around the first rotation center 315. The first inner storage ring 312 rotates and moves the plurality of first inner carrying positions 3121 to pass through the first inner pick-and-place position 3122 sequentially.

For the dual-ring structure of the first reagent container storage mechanism 31, the first inner storage ring 312 is provided with a plurality of first inner carrying positions 3121 along the first inner rotation path.

The first inner pick-and-place position 3122 is located on the first inner rotation path. As the first inner storage ring 312 rotates, the target first inner carrying position 3121 moves to the first inner pick-and-place position 3122. At this point, the reagent container transfer mechanism 52 can either place a target reagent container 40 into the target first inner carrying position 3121 at the first inner pick-and-place position 3122 or take and transfer the reagent container 40 from the target first inner carrying position 3121 at the first inner pick-and-place position 3122.

The first outer storage ring 313 is provided with a plurality of first outer carrying positions 3131 for carrying the reagent containers 40 along a circumferential direction of the first rotation center 315. The first outer storage ring 313 rotates so that the plurality of first outer carrying positions 3131 pass sequentially through the first outer pick-and-place position 3132.

For the dual-ring structure of the first reagent container storage mechanism 31, the first outer storage ring 313 is provided with a plurality of first outer carrying positions 3131 along the first outer rotation path.

The first outer pick-and-place position 3132 is located on the first outer rotation path. As the first outer storage ring 313 rotates, the target first outer carrying position 3131 moves to the first inner pick-and-place position 3122. At this point, the reagent container transfer mechanism 52 can either place a target reagent container 40 into the target first outer carrying position 3131 at the first outer pick-and-place position 3132 or take and transfer the reagent container 40 from the target first outer carrying position 3131 at the first outer pick-and-place position 3132.

For the dual-ring structure of the first reagent container storage mechanism 31, in one embodiment, the first inner storage ring 312 and the first outer storage ring 313 rotate synchronously at the same rotational speed. That is, when the first inner storage ring 312 rotates, the first outer storage ring 313 rotates synchronously with the same rotational speed; or when the first outer storage ring 313 rotates, the first inner storage ring 312 rotates synchronously with the same rotational speed.

In another embodiment, the first inner storage ring 312 and the first outer storage ring 313 rotate independently of each other. That is, when the first inner storage ring 312 rotates, the first outer storage ring 313 can remain stationary or rotate at the same rotational speed or a different rotational speed as the first inner storage ring 312. Alternatively, when the first outer storage ring 313 rotates, the first inner storage ring 312 can remain stationary or rotate at the same rotational speed or a different rotational speed as the first outer storage ring 313.

Furthermore, the second inner storage ring 322 is provided with a plurality of second inner carrying positions 3221 for carrying the reagent containers 40 along a circumferential direction of the second rotation center 325. The second inner storage ring 322 rotates so that the plurality of second inner carrying positions 3221 pass sequentially through the second inner pick-and-place position 3222.

For the dual-ring structure of the second reagent container storage mechanism 32, the second inner storage ring 322 is provided with a plurality of second inner carrying positions 3221 along the second inner rotation path.

The second inner pick-and-place position 3222 is located on the second inner rotation path. As the second inner storage ring 322 rotates, the target second inner carrying position 3221 moves to the second inner pick-and-place position 3222. At this point, the reagent container transfer mechanism 52 can either place a target reagent container 40 into the target second inner carrying position 3221 at the second inner pick-and-place position 3222, or take and transfer the reagent container 40 from the target second inner carrying position 3221 at the second inner pick-and-place position 3222.

The second outer storage ring 323 is provided with a plurality of second outer carrying positions 3231 for carrying the reagent containers 40 along the circumferential direction of the second rotation center 325. The second outer storage ring 323 rotates so that the plurality of second outer carrying positions 3231 pass sequentially through the second outer pick-and-place position 3232.

For the dual-ring structure of the second reagent container storage mechanism 32, the second outer storage ring 323 is provided with a plurality of second outer carrying positions 3231 along the second outer rotation path.

The second outer pick-and-place position 3232 is located on the second outer rotation path. As the second outer storage ring 323 rotates, the target second outer carrying position 3231 moves to the second inner pick-and-place position 3222. At this point, the reagent container transfer mechanism 52 can either place a target reagent container 40 into the target second outer carrying position 3231 at the second outer pick-and-place position 3232, or take and transfer the reagent container 40 from the target second outer carrying position 3231 at the second outer pick-and-place position 3232.

For the dual-ring structure of the second reagent container storage mechanism 32, in one embodiment, the second inner storage ring 322 and the second outer storage ring 323 rotate synchronously at the same rotational speed. That is, when the second inner storage ring 322 rotates, the second outer storage ring 323 rotates synchronously with the same rotational speed; or when the second outer storage ring 323 rotates, the second inner storage ring 322 rotates synchronously with the same rotational speed.

In another embodiment, the second inner storage ring 322 and the second outer storage ring 323 rotate independently of each other. That is, when the second inner storage ring 322 rotates, the second outer storage ring 323 can remain stationary or rotate at the same rotational speed or a different rotational speed as the second inner storage ring 322. Alternatively, when the second outer storage ring 323 rotates, the second inner storage ring 322 can remain stationary or rotate at the same rotational speed or a different rotational speed as the second outer storage ring 323.

Furthermore, the inner buffering ring 512 is provided with a plurality of third inner carrying positions 5121 for carrying the reagent containers 40 along the circumferential direction of the third rotation center 515. The inner buffering ring 512 rotates such that the plurality of third inner carrying positions 5121 pass sequentially through the third inner pick-and-place position 5122.

For the dual-ring structure of the reagent container buffering mechanism 51, the inner buffering ring 512 is provided with a plurality of third inner carrying positions 5121 along the third inner rotation path.

The third inner pick-and-place position 5122 is located on the third inner rotation path. As the inner buffering ring 512 rotates, the target third inner carrying position 5121 moves to the third inner pick-and-place position 5122. At this point, the reagent container transfer mechanism 52 can either place a target reagent container 40 into the target third inner carrying position 5121 at the third inner pick-and-place position 5122, or take and transfer the reagent container 40 from the target third inner carrying position 5121 at the third inner pick-and-place position 5122.

The outer buffering ring 513 is provided with a plurality of third outer carrying positions 5131 for carrying the reagent containers 40 along the circumferential direction of the third rotation center 515. The outer buffering ring 513 rotates such that the plurality of third outer carrying positions 5131 pass sequentially through the third outer pick-and-place position 5132.

For the dual-ring structure of the reagent container buffering mechanism 51, the outer buffering ring 513 is provided with a plurality of third outer carrying positions 5131 along the third outer rotation path.

The third outer pick-and-place position 5132 is located on the third outer rotation path. As the outer buffering ring 513 rotates, the target third outer carrying position 5131 moves to the third inner pick-and-place position 5122. At this point, the reagent container transfer mechanism 52 can either place a target reagent container 40 into the target third outer carrying position 5131 at the third outer pick-and-place position 5132, or take and transfer the reagent containers 40 from the target third outer carrying position 5131 at the third outer pick-and-place position 5132.

For the dual-ring structure of the reagent container buffering mechanism 51, in one embodiment, the inner buffering ring 512 and the outer buffering ring 513 rotate synchronously at the same rotational speed. That is, when the inner buffering ring 512 rotates, the outer buffering ring 513 also rotates synchronously at the same rotational speed with the inner buffering ring 512; or when the outer buffering ring 513 rotates, the inner buffering ring 512 also rotates synchronously at the same rotational speed with the outer buffering ring 513.

In another embodiment, the inner buffering ring 512 and the outer buffering ring 513 rotate independently of each other. That is, when the inner buffering ring 512 rotates, the outer buffering ring 513 can remain stationary or rotate at the same rotational speed or a different rotational speed as the inner buffering ring 512. Alternatively, when the outer buffering ring 513 rotates, the inner buffering ring 512 can remain stationary or rotate at the same rotational speed or a different rotational speed as the outer buffering ring 513.

Therefore, as described above, for the dual-ring structure of the first reagent container storage mechanism 31, second reagent container storage mechanism 32, and reagent container buffering mechanism 51, the reagent container transfer mechanism 52 can be configured to transfer reagent containers 40 between the first inner pick-and-place position 3122 or the first outer pick-and-place position 3132 and the third inner pick-and-place position 5122; or can be configured to transfer reagent containers 40 between the first inner pick-and-place position 3122 or the first outer pick-and-place position 3132 and the third outer pick-and-place position 5132; or can be configured to transfer reagent containers 40 between the second inner pick-and-place position 3222 or the second outer pick-and-place position 3232 and the third inner pick-and-place position 5122; or can be configured to transfer reagent containers 40 between the second inner pick-and-place position 3222 or the second outer pick-and-place position 3232 and the third outer pick-and-place position 5132.

Furthermore, in some embodiments, the reagent container transfer mechanism 52 can also be configured to transfer reagent containers 40 between the first reagent container storage mechanism 31 and the second reagent container storage mechanism 32.

Furthermore, a vertical symmetry line 700 is formed through the fourth rotation center 21 and perpendicular to the center line 200. The third rotation center 515 is offset from the vertical symmetry line 700 and is positioned adjacent to either the first reagent container storage mechanism 31 or the second reagent container storage mechanism 32.

Specifically, after the reaction wheel 20 is installed on the support frame 10 with the fourth rotation center 21 as a reference, and the first reagent container storage mechanism 31 and the second reagent container storage mechanism 32 are installed relative to the reaction wheel 20, the remaining available space among the reaction wheel 20, the first reagent container storage mechanism 31, and the second reagent container storage mechanism 32 is limited. Therefore, after the reagent container buffering mechanism 51 is installed on the support frame 10 with the third rotation center 515 as a reference, the third rotation center 515 will be offset from the vertical symmetry line 700 and positioned adjacent to either the first reagent container storage mechanism 31 or the second reagent container storage mechanism 32.

Further, in one embodiment, an intersection point of the vertical symmetry line 700 and the center line 200 is located at a midpoint of the center line 200.

Specifically, the first rotation center 315 and the second rotation center 325 are symmetrically distributed on both sides of the vertical symmetry line 700, so that the first reagent container storage mechanism 31 and the second reagent container storage mechanism 32 are symmetrically arranged on both sides of the vertical symmetry line 700. Moreover, lines each of which passes through every adjacent two of the first rotation center 315, the second rotation center 325, and the fourth rotation center 21 intersect each other to form an isosceles triangle.

Furthermore, a horizontal symmetry line 800 is formed passing through the fourth rotation center 21 and parallel to the center line 200. The sample analyzer 100 also includes a sample delivery mechanism 70 for conveying sample containers. The center line 200 and the sample delivery mechanism 70 are respectively located on both sides of the horizontal symmetry line 800.

Specifically, the first reagent container storage mechanism 31, the second reagent container storage mechanism 32, and the reagent container buffering mechanism 51 are all positioned on the same side of the horizontal symmetry line 800, and the sample delivery mechanism 70 is positioned on the other side of the horizontal symmetry line 800, so that the operator can easily take the reagent containers 40 from and place the reagent containers 40 on the first reagent container storage mechanism 31, the second reagent container storage mechanism 32, and the reagent container buffering mechanism 51, meanwhile the sample delivery mechanism 70 may transfer the reagent containers 40 without interference.

Furthermore, the reagent container transfer mechanism 52 includes a pick-and-place device 521, a rotation driving device 522, a lifting driving device 523, and a horizontal driving device 524.

The pick-and-place device 521 is configured to load and unload reagent containers 40, and rotates along the rotation axis under the drive of the rotation driving device 522.

Specifically, the pick-and-place device 521 can pick up and release the reagent containers 40.

In one embodiment, the pick-and-place device 521 is a gripper, which is used to grip the reagent containers 40 to transfer them. Under the drive of the rotation driving device 522, the gripper can adjust the angle at which it grips or releases the reagent containers 40, facilitating more efficient transfer of the reagent containers 40.

Specifically, because the transfer path 300 of the reagent container transfer mechanism 52 is offset from the center line 200, the pick-and-place positions on the first reagent container storage mechanism 31 have different orientations relative to the first rotation center 315, the pick-and-place positions on the second reagent container storage mechanism 32 have different phase angles relative to the second rotation center 325, and the pick-and-place positions on the reagent container buffering mechanism 51 have different phase angles relative to the third rotation center 515. Therefore, the gripper needs to adjust its gripping or releasing angle under the drive of the rotation driving device 522 when gripping or releasing reagent containers 40 at different pick-and-place positions.

In another embodiment, the pick-and-place device 521 is a suction nozzle, which is connected to a pump via a pipeline. The pump operates and controls the suction nozzle to either pick up or release the reagent container 40 through the pipeline.

Specifically, because the transfer path 300 of the reagent container transfer mechanism 52 is offset from the center line 200, the pick-and-place positions on the first reagent container storage mechanism 31 have different phase angles relative to the first rotation center 315. The pick-and-place positions on the second reagent container storage mechanism 32 also have different phase angles relative to the second rotation center 325, and the pick-and-place positions on the reagent container buffering mechanism 51 have different phase angles relative to the third rotation center 515. Therefore, the suction nozzle is positioned away from the rotation axis of the rotation driving device 522, so that the suction nozzle can pick up or release the reagent container 40 at different pick-and-place positions.

The lifting driving device 523 is configured to drive the pick-and-place device 521 to move up and down, allowing the pick-and-place device 521 to descend to each pick-and-place position to pick up or release the reagent container 40, and after picking up or releasing the reagent container 40, it can move upward to leave the first reagent container storage mechanism 31, the second reagent container storage mechanism 32, or the reagent container buffering mechanism 51.

The horizontal driving device is configured to drive the pick-and-place device 521 to move along the transfer path 300 between the first pick-and-place position 314 and the third pick-and-place position 514 to transfer reagent containers 40 between the reagent container buffering mechanism 51 and the first reagent container storage mechanism 31, or to move between the second pick-and-place position 324 and the third pick-and-place position 514 to transfer reagent containers 40 between the reagent container buffering mechanism 51 and the second reagent container storage mechanism 32.

Specifically, the horizontal driving device 524 is configured to drive the pick-and-place device 521 to transfer reagent containers 40 along the transfer path 300, or to drive the pick-and-place device 521 to move along the transfer path 300 to reach the target pick-and-place position to pick up the reagent container 40.

In one embodiment, the pick-and-place device 521 is installed on the output end of the rotation driving device 522, the rotation driving device 522 is installed on the output end of the lifting driving device 523, and the lifting driving device 523 is installed on the output end of the horizontal driving device 524.

In another embodiment, the pick-and-place device 521 is installed on the output end of the lifting driving device 523, the lifting driving device 523 is installed on the output end of the rotation driving device 522, and the rotation driving device 522 is installed on the output end of the horizontal driving device 524.

Furthermore, the reagent container transfer mechanism 52 also includes a recycling box 60, and the recycling opening 61 of the recycling box 60 is positioned under the transfer path 300. In this way, the reagent containers 40 can be discarded into the recycling opening 61 by means of movement of the reagent container transfer mechanism 52 merely along the transfer path 300, thereby simplifying the movement path of the reagent container transfer mechanism 52 and improving the efficiency of loading the reagent container 40 while discarding the reagent container 40.

Under the drive of the horizontal driving device 524, the pick-and-place device 521 can also move above the recycling opening 61 and drop the reagent container 40 into the recycling box 60 via the recycling opening 61, thus enabling the recycling of reagent containers 40. The recycled reagent containers 40 may be empty or may still contain reagents.

Furthermore, in one embodiment, the recycling opening 61 is located between the first reagent container storage mechanism 31 and the reagent container buffering mechanism 51.

In another embodiment, the recycling opening 61 is located between the second reagent container storage mechanism 32 and the reagent container buffering mechanism 51.

In some embodiments, the recycling opening 61 and the third rotation center 515 are respectively positioned on opposite sides of the vertical symmetry line 700, so that the recycling box 60 and the reagent container buffering mechanism 51 are respectively positioned on opposite sides of the vertical symmetry line 700. As such, the gap between the first reagent container storage mechanism 31 and the reagent container buffering mechanism 51, or the gap between the second reagent container storage mechanism 32 and the reagent container buffering mechanism 51 is utilized fully for arrangement of the recycling box 60, so that the recycling box 60 can be integrated on the sample analyzer 100 and located on a side of the sample analyzer away from the sample conveying mechanism 70 in a compact manner, facilitating the operator to take the sample container 40 collected in the recycling box 60 away.

Furthermore, the reaction wheel 20 can carry a plurality of reaction vessels, which are used to contain the analyzing sample and the reagents injected from the first reagent container storage mechanism 31 and/or the second reagent container storage mechanism 32. The reaction wheel 20 is also configured to incubate the mixture of the sample and reagent.

Additionally, the reaction wheel 20 includes a first reagent dispensing position 22, a second reagent dispensing position 23, a third reagent dispensing position 24, and a fourth reagent dispensing position 25.

The first reagent container storage mechanism 31 includes a first reagent aspirating position 316 and a second reagent aspirating position 317.

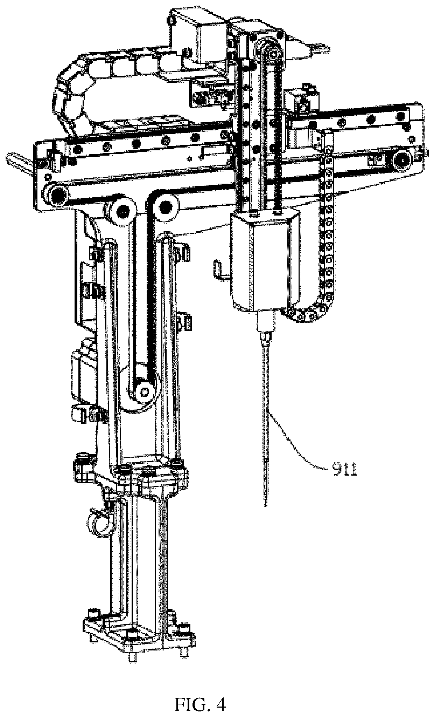

Referring to FIG. 4 and in conjunction with FIG. 1, the sample analyzer 100 also includes a first reagent injection mechanism 91. The first reagent injection mechanism 91 is configured to transfer the reagent from the reagent container 40 carried by the first reagent container storage mechanism 31 to the reaction vessels carried by the reaction wheel 20.

The first reagent injection mechanism 91 includes a first reagent needle 911 and a second reagent needle, which operate independently from each other.

The first reagent needle 911 is configured to aspirate reagent from a reagent container 40 located at either the first reagent aspirating position 316 or the second reagent aspirating position 317, transfer the aspirated reagent along a first straight line 913, and dispense the reagent into a reaction vessel located at either the first reagent dispensing position 22 or the second reagent dispensing position 23.

The second reagent needle is configured to aspirate reagent from the other reagent container 40 located at the other of the first reagent aspirating position 316 or the second reagent aspirating position 317, transfer the aspirated reagent along a second straight line 914, and dispense the reagent into the other of the reaction vessels at the first reagent dispensing position 22 or the second reagent dispensing position 23.

The reaction wheel 20 rotates to move the two target reaction vessels to the first reagent dispensing position 22 and the second reagent dispensing position 23, and the first reagent container storage mechanism 31 rotates to move the two target reagent containers 40 to the first reagent aspirating position 316 and the second reagent aspirating position 317.

The first reagent needle 911 will aspirate reagent from a target reagent container 40 located at either the first reagent aspirating position 316 or the second reagent aspirating position 317, transfer the aspirated reagent along the first straight line 913, and dispense the reagent into one of the target reaction vessels at the first reagent dispensing position 22 or the second reagent dispensing position 23.

The second reagent needle will aspirate reagent from the other target reagent container 40 located at the other of the first reagent aspirating position 316 or the second reagent aspirating position 317, transfer the aspirated reagent along the second straight line 914, and dispense the reagent into the other of the target reaction vessels at the first reagent dispensing position 22 or the second reagent dispensing position 23.

Compared to the reagent dispensing methods used in conventional sample analyzers 100, in the present invention, the reagent is transferred by both the first reagent needle 911 along the first straight line 913 independently and the second reagent needle along the second straight line 914 independently, thereby improving the efficiency of reagent dispensing into the reaction vessels. This avoids the need for the first reagent needle 911 and the second reagent needle to aspirate reagent one after another, and also dispense reagent one after another, as well as the rotation required for reagent transfer and resetting. As a result, the time for the reaction wheel 20 to wait for the first reagent needle 911 and the second reagent needle to dispense the reagent, as well as the time for the first reagent container storage mechanism 31 to wait for the first reagent needle 911 and the second reagent needle to aspirate the reagent are effectively reduced, and the reagent transfer time and resetting time of the first reagent needle 911 and the second reagent needle are reduced. Additionally, the first reagent needle 911 and second reagent needle that independently operate can be controlled to perform reagent transfer based on demand, either with the first or second reagent needle.

Referring again to FIG. 2, in one embodiment, the first reagent container storage mechanism 31 has a single-ring structure, with a plurality of first carrying positions 311 for transferring reaction vessels along a first rotation path centered on the first rotation center 315.

Referring again to FIG. 1, in another embodiment, the first reagent container storage mechanism 31 has a dual-ring structure. The first inner storage ring 312 is formed with a plurality of first inner carrying positions 3121 along the first inner rotation path, and each of the first inner carrying positions 3121 can carry a reagent container 40.

The first outer storage ring 313 is formed with a plurality of first outer carrying positions 3131 along the first outer rotation path, and each of the first outer carrying positions 3131 can carry a reagent container 40.

Further, in a more specific embodiment, the first reagent aspirating position 316 is located on the first inner rotation path of the first inner storage ring 312, with a plurality of first inner carrying positions 3121 moving along the first inner rotation path and passing through the first reagent aspirating position 316 sequentially. The second reagent aspirating position 317 is located on the first outer rotation path of the first outer storage ring 313, with a plurality of first outer carrying positions 3131 moving along the first outer rotation path and passing through the second reagent aspirating position 317 sequentially.

In another more specific embodiment, the first reagent aspirating position 316 is located on the first outer rotation path of the first outer storage ring 313, with a plurality of first outer carrying positions 3131 moving along the first outer rotation path and passing through the first reagent aspirating position 316 sequentially. The second reagent aspirating position 317 is located on the first inner rotation path of the first inner storage ring 312, with a plurality of first inner carrying positions 3121 moving along the first inner rotation path and passing through the second reagent aspirating position 317 sequentially.

In one embodiment, the first inner storage ring 312 and the first outer storage ring 313 rotate synchronously.

In another embodiment, the first inner storage ring 312 can rotate independently of the first outer storage ring 313. That is, when the first inner storage ring 312 rotates, the first outer storage ring 313 can remain stationary or rotate at the same or a different speed from the first inner storage ring 312; alternatively, when the first outer storage ring 313 rotates, the first inner storage ring 312 can remain stationary or rotate at the same or a different speed from the first outer storage ring 313.

Furthermore, the independently rotating first inner storage ring 312 can control the target reagent container 40 to move to the first reagent aspirating position 316 or second reagent aspirating position 317 corresponding to the first reagent needle 911, depending on the type of reagent to be aspirated from the reagent container 40 carried by the first inner carrying position 3121.

The independently rotating first outer storage ring 313 can control the target reagent container 40 to move to the second reagent aspirating position 317 or first reagent aspirating position 316 corresponding to the second reagent needle, depending on the type of reagent to be aspirated from the reagent container 40 carried by the first outer carrying position 3131.

Compared to the typical first inner storage ring 312 and the first outer storage ring 313 that rotate synchronously, the first inner storage ring 312 and the first outer storage ring 313 according to the embodiments of the present invention that rotate independently provide more flexibility for reagent aspiration by the first reagent needle 911 and second reagent needle.

Further, the reaction wheel 20 includes an inner reaction ring 26 and an outer reaction ring 27, and the inner reaction ring 26 is located on an inner side of the outer reaction ring 27.

The inner reaction ring 26 is provided with a plurality of fourth inner carrying positions 261 along a fourth inner rotation path, and each of the fourth inner carrying positions 261 can carry a reaction vessel.

The outer reaction ring 27 is formed with a plurality of fourth outer carrying positions 271 along the fourth outer rotation path, and each of the fourth outer carrying positions 271 can carry a reaction vessel.

Further, in a more specific embodiment, the first reagent dispensing position 22 is located on the fourth inner rotation path of the inner reaction ring 26, with a plurality of fourth inner carrying positions 261 moving along the fourth inner rotation path and passing through the first reagent dispensing position 22 sequentially.

The second reagent dispensing position 23 is located on the fourth outer rotation path of the outer reaction ring 27, with a plurality of fourth outer carrying positions 271 moving along the fourth outer rotation path and passing through the second reagent dispensing position 23 sequentially.

In another more specific embodiment, the first reagent dispensing position 22 is located on the fourth outer rotation path of the outer reaction ring 27, with a plurality of fourth outer carrying positions 271 moving along the fourth outer rotation path and passing through the first reagent dispensing position 22 sequentially.

The second reagent dispensing position 23 is located on the fourth inner rotation path of the inner reaction ring 26, with a plurality of fourth inner carrying positions 261 moving along the fourth inner rotation path and passing through the second reagent dispensing position 23 sequentially.

In one embodiment, the inner reaction ring 26 and the outer reaction ring 27 rotate synchronously.

In another embodiment, the inner reaction ring 26 can rotate independently of the outer reaction ring 27. That is, when the inner reaction ring 26 rotates, the outer reaction ring 27 can remain stationary, or rotate at the same or different speed from the inner reaction ring 26; alternatively, when the outer reaction ring 27 rotates, the inner reaction ring 26 can remain stationary, or rotate at the same or different speed from the outer reaction ring 27.

Furthermore, the independently rotating inner reaction ring 26 can control the target reaction vessel to move to the first reagent dispensing position 22 or second reagent dispensing position corresponding to the first reagent needle 911, depending on the type of reagent to be dispensed from the reaction vessel carried by the fourth inner carrying position 261.

The independently rotating outer reaction ring 27 can control the target reaction vessel to move to the second reagent dispensing position or first reagent dispensing position 22 corresponding to the second reagent needle, depending on the type of reagent to be dispensed from the reaction vessel carried by the fourth outer carrying position 271.

Compared to the inner reaction ring 26 and the outer reaction ring 27 that rotate synchronously, the inner reaction ring 26 and outer reaction ring 27 that rotate independently from each other facilitate the first reagent needle 911 and second reagent needle to dispense reagents.

Furthermore, by providing the rotating inner reaction ring 26 and the outer reaction ring 27 that rotate independently from each other, and the first inner storage ring 312 and the first outer storage ring 313 that rotate independently from each other, and by independently operating the first reagent needle 911 to dispense reagents from the first outer storage ring 313 to the inner reaction ring 26 or outer reaction ring 27, and by independently operating the second reagent needle to dispense reagents from the first inner storage ring 312 to the outer reaction ring 27 or inner reaction ring 26, the sample analyzer 100 can integrate two independent systems for supplying, dispensing, and detecting reagents, thus significantly improving the analyzing efficiency of the sample analyzer 100.

Additionally, in one embodiment, a first center line 200 is defined by extending from a first rotation center 315 to a third rotation center 515, and a first straight line 913 and a second straight line 914 are each parallel to the first center line 200.

In some embodiments, the distance between the first straight line 913 and the first center line 200 is equal to the distance between the second straight line 914 and the first center line 200.

Further, the time required for the first reagent needle 911 to move from the first reagent aspirating position 316 to the first reagent dispensing position 22 along the first straight line 913 is the same as the time required for the second reagent needle to move from the second reagent aspirating position 317 to the second reagent dispensing position along the second straight line 914.

Additionally, in one embodiment, the first reagent needle 911 and the second reagent needle are installed on different brackets and spaced apart at a certain distance.

Further, the first reagent needle 911 moves vertically along the vertical direction through a lifting driving device 523, so that the first reagent needle 911 can move vertically between one of the first reagent aspirating position 316 and the second reagent aspirating position 317, and one of the first reagent dispensing position 22 and the second reagent dispensing position 23.

Additionally, the first reagent needle 911 also moves horizontally along the first straight line 913 through a horizontal driving device, so that the first reagent needle 911 can move between the first reagent aspirating position 316 and one of the first reagent dispensing position 22 and the second reagent dispensing position 23, or between the second reagent aspirating position 317 and one of the second reagent dispensing position 23 and the first reagent dispensing position 22.

The second reagent needle moves vertically along the vertical direction through another lifting driving device 523, so that the second reagent needle can move vertically between one of the first reagent aspirating position 316 and the second reagent aspirating position 317, and one of the first reagent dispensing position 22 and the second reagent dispensing position 23.

Further, the second reagent needle also moves horizontally along the second straight line 914 through another horizontal driving device, so that the second reagent needle can move between the first reagent aspirating position 316 and one of the first reagent dispensing position 22 and the second reagent dispensing position 23, or between the second reagent aspirating position 317 and one of the second reagent dispensing position 23 and the first reagent dispensing position 22.

In another embodiment, the first reagent needle 911 and the second reagent needle are installed on the same bracket. The first reagent needle 911 and the second reagent needle each move vertically through separate lifting driving devices 523, and the first reagent needle 911 and the second reagent needle move horizontally along their respective first straight line 913 and second straight line 914 through separate horizontal driving devices.

Further, the reaction wheel 20 also includes a third reagent dispensing position 24 and a fourth reagent dispensing position 25. The reaction wheel 20 rotates about the fourth rotation center 21, driving a plurality of third carrying positions 511 to pass sequentially through the third reagent dispensing position 24 and the fourth reagent dispensing position 25.

The third reagent dispensing position 24 is located on the fourth inner rotation path of the inner reaction ring 26, and the fourth reagent dispensing position 25 is located on the fourth outer rotation path of the outer reaction ring 27.

The sample analyzer 100 also includes a second reagent injection mechanism 92, which is configured to transfer and dispense the reagents from the reagent containers 40 in the second reagent container storage mechanism 32 to the reaction vessels carried by the reaction wheel 20.

The second reagent container storage mechanism 32 is located on the outer side of the reaction wheel 20 and can carry a plurality of reagent containers 40. The second reagent container storage mechanism 32 can rotate to drive the plurality of reagent containers 40 to move along a second rotation path.

The second reagent container storage mechanism 32 is provided with a plurality of second carrying positions 321 along the second rotation path, each of which can carry a reagent container 40.

The second reagent container storage mechanism 32 includes a third reagent aspirating position 326 and a fourth reagent aspirating position 327. The second reagent container storage mechanism 32 rotates about the second rotation center 325, driving the plurality of second carrying positions 321 to pass through the third reagent aspirating position 326 and the fourth reagent aspirating position 327 sequentially.

The second reagent injection mechanism 92 includes independently operating third and fourth reagent needles. The third and fourth reagent needles have the same structure as the first reagent needle 911 and the second reagent needle.

The third reagent needle is configured to absorb reagent from a reagent container 40 located at either the third reagent aspirating position 326 or the fourth reagent aspirating position 327, and then transfer and dispense the absorbed reagent along the third straight line 923 into a reaction vessel located at either the third reagent dispensing position 24 or the fourth reagent dispensing position 25.

The fourth reagent needle is configured to absorb reagent from the other reagent container 40 located at either the third reagent aspirating position 326 or the fourth reagent aspirating position 327, and then transfer and dispense the absorbed reagent along the fourth straight line 924 into the other reaction vessel located at either the third reagent dispensing position 24 or the fourth reagent dispensing position 25.

The reaction wheel 20 rotates to move the two target reaction vessels to the third reagent dispensing position 24 and the fourth reagent dispensing position 25 respectively, and the second reagent container storage mechanism 32 rotates to move the two target reagent containers 40 to the third reagent aspirating position 326 and the fourth reagent aspirating position 327 respectively.

Subsequently, the third reagent needle will absorb reagent from the target reagent container 40 located at one of the third reagent aspirating position 326 and the fourth reagent aspirating position 327, and transfer the absorbed reagent along the third straight line 923 to the target reaction vessel located at one of the third reagent dispensing position 24 and the fourth reagent dispensing position 25.

Meanwhile, the fourth reagent needle will absorb reagent from the target reagent container 40 located at the other of the third reagent aspirating position 326 and the fourth reagent aspirating position 327, and transfer the absorbed reagent along the fourth straight line 924 to the target reaction vessel located at the other of the third reagent dispensing position 24 and the fourth reagent dispensing position 25.

Referring to FIG. 2, in one embodiment, the second reagent container storage mechanism 32 is a single-ring structure, and a plurality of second carrying positions 321 are configured for transferring the reagent vessels along the second rotation path and around the second rotation center 325.

Referring again to FIG. 1, in another embodiment, the second reagent container storage mechanism 32 is a dual-ring structure. The second inner storage ring 322 is provided with a plurality of second inner carrying positions 3221 along the second inner rotation path, and each of the second inner carrying positions 3221 can carry a reagent container 40.

The second outer storage ring 323 is provided with a plurality of second outer carrying positions 3231 along the second outer rotation path, and each of the second outer carrying positions 3231 can carry a reagent container 40.

Further, in a more specific embodiment, the third reagent aspirating position 326 is located on the second inner rotation path of the second inner storage ring 322, and a plurality of second inner carrying positions 3221 move along the second inner rotation path to pass through the third reagent aspirating position 326 sequentially.

The fourth reagent aspirating position 327 is located on the second outer rotation path of the second outer storage ring 323, and a plurality of second outer carrying positions 3231 move along the second outer rotation path to pass through the fourth reagent aspirating position 327 sequentially.

In another more specific embodiment, the third reagent aspirating position 326 is located on the second outer rotation path of the second outer storage ring 323, and a plurality of second outer carrying positions 3231 move along the first outer rotation path and to pass through the third reagent aspirating position 326 sequentially.

The fourth reagent aspirating position 327 is located on the second inner rotation path of the second inner storage ring 322, and a plurality of second inner carrying positions 3221 move along the second inner rotation path to pass through the fourth reagent aspirating position 327 sequentially.

In one embodiment, the second inner storage ring 322 and the second outer storage ring 323 rotate synchronously.

In another embodiment, the second inner storage ring 322 can rotate independently relative to the second outer storage ring 323. That is, when the second inner storage ring 322 rotates, the second outer storage ring 323 can remain stationary, or rotate at the same speed or a different speed from the second inner storage ring 322. Alternatively, when the second outer storage ring 323 rotates, the second inner storage ring 322 can remain stationary, or rotate at the same speed or a different speed from the second outer storage ring 323.

Furthermore, the second inner storage ring 322 that rotates independently can control the target reagent container 40 to move to the third reagent aspirating position 326 or the fourth reagent aspirating position 327, based on the type of reagent to be drawn from the reagent container 40 carried on the second inner carrying position 3221.

The second outer storage ring 323 that rotate independently can control the target reagent container 40 to move to the third reagent aspirating position 326 or the fourth reagent aspirating position 327, based on the type of reagent to be drawn from the reagent container 40 carried on the second outer carrying position 3231.

Further, the reaction wheel 20 has a horizontal symmetry line 800 and a vertical symmetry line 700 that both pass through the third rotation center 515. The horizontal symmetry line 800 and the vertical symmetry line 700 divide the reaction wheel 20 into the first quadrant, second quadrant, third quadrant, and fourth quadrant.

In one embodiment, the first rotation center 315 and the second rotation center 325 are located on opposite sides of the vertical symmetry line 700 and on the same side of the horizontal symmetry line 800, so that the first reagent container storage mechanism 31 and the second reagent container storage mechanism 32 are respectively located within the first quadrant and second quadrant on the outer side of the reaction wheel 20, or within the third quadrant and fourth quadrant on the outer side of the reaction wheel 20.

In another embodiment, the first rotation center 315 and the second rotation center 325 are located on opposite sides of the horizontal symmetry line 800 and on the same side of the vertical symmetry line 700, so that the first reagent container storage mechanism 31 and the second reagent container storage mechanism 32 are respectively located within the first quadrant and fourth quadrant on the outer side of the reaction wheel 20, or within the second quadrant and third quadrant on the outer side of the reaction wheel 20.

Specifically, the reaction wheel 20, the first reagent container storage mechanism 31, and the second reagent container storage mechanism 32 are all located on the support frame 10, and the first reagent container storage mechanism 31 and the second reagent container storage mechanism 32 are located on the same side of the support frame 10 to facilitate the reinjection of reagent containers 40 for the first reagent container storage mechanisms 31 and the second reagent container storage mechanisms 32.

Further, the center line 200 is defined by extending from the first rotation center 315 of the first reagent container storage mechanism 31 to the second rotation center 325 of the second reagent container storage mechanism 32.

An intersection point of the vertical symmetry line 700 and the center line 200 is located at a midpoint of the center line 200.

Specifically, the straight-line distance from the first rotation center 315 to the third rotation center 515 is equal to the straight-line distance from the second rotation center 325 to the third rotation center 515, so that lines passing through every adjacent two of the first rotation center 315, the second rotation center 325, and the third rotation center 515 intersect each other to form an isosceles triangle. Moreover, the first reagent container storage mechanism 31 and the second reagent container storage mechanism 32 are symmetrically distributed on both sides of the vertical symmetry line 700 and the reaction wheel 20.

For the sake of description, spatial relative terms such as "above", "over", "on the upper surface of", "on top of", etc., can be used to describe the spatial relationship between a device and other devices or between feature and other features as shown in the drawings. It should be understood that these spatial relative terms are intended to include different orientations during use or operation, in addition to the orientation described in the drawings. For example, if a device in the drawings is inverted, a device originally described as being "above" or "over" another device will then be positioned as "below" or "under" the other device. Therefore, the exemplary term "above" can include both "above" and "below" orientations. The device may also be positioned in other different ways (e.g., rotated 90 degrees or in another orientation), and the spatial relative descriptions used here should be interpreted accordingly.

In addition, it should be noted that the use of terms like "first", "second", etc., to define components is solely for the purpose of distinguishing the corresponding components. Unless otherwise stated, these terms do not carry any special meaning and should not be understood as limiting the scope of protection of the present invention.

The above is only a preferred embodiment of the present invention. It should be noted that for those skilled in the art, various improvements and modifications can be made without departing from the principles of the present invention. These improvements and modifications should also be considered within the scope of protection of the present invention.

## Claims

1. A sample analyzer, **characterized by** comprising:
a reaction wheel (20) arranged on a support frame (10);
a first reagent container storage mechanism (31) and a second reagent container storage mechanism (32), wherein a center line (200) is defined by extending from a first rotation center (315) of the first reagent container storage mechanism (31) to a second rotation center (325) of the second reagent container storage mechanism (32);
a reagent container buffering mechanism (51) configured for carrying reagent containers (40) and located between the first reagent container storage mechanism (31) and the second reagent container storage mechanism (32), wherein a third rotation center (515) of the reagent container buffering mechanism (51) and a fourth rotation center (21) of the reaction wheel (20) are respectively located on two sides of the center line (200); and
a reagent container transfer mechanism (52) configured for transferring reagent containers (40) between the first reagent container storage mechanism (31) and the reagent container buffering mechanism (51), and/or between the second reagent container storage mechanism (32) and the reagent container buffering mechanism (51).

2. The sample analyzer according to claim 1, wherein a transfer path (300) of the reagent container transfer mechanism (52) is parallel to the center line (200), the first reagent container storage mechanism (31) has at least one first pick-and-place position (314), the second reagent container storage mechanism (32) has at least one second pick-and-place position (324), and the reagent container buffering mechanism (51) has at least one third pick-and-place position (514), and wherein the at least one first pick-and-place position (314), the at least one second pick-and-place position (324) and the at least one third pick-and-place position (514) are all located beneath the transfer path (300).

3. The sample analyzer according to claim 2, wherein the first reagent container storage mechanism (31) comprises a first inner storage ring (312) and a first outer storage ring (313), the first inner storage ring (312) is located on an inner side of the first outer storage ring (313), the at least one first pick-and-place position (314) comprises a first inner pick-and-place position (3122) configured on the first inner storage ring (312) corresponding to the transfer path (300), and a first outer pick-and-place position (3132) configured on the first outer storage ring (313) corresponding to the transfer path (300);
the second reagent container storage mechanism (32) comprises a second inner storage ring (322) and a second outer storage ring (323), the second inner storage ring (322) is located on an inner side of the second outer storage ring (323), the at least one second pick-and-place position (324) comprises a second inner pick-and-place position (3222) configured on the second inner storage ring (322) corresponding to the transfer path (300), and a second outer pick-and-place position (3232) configured on the second outer storage ring (323) corresponding to the transfer path (300);
the reagent container buffering mechanism (51) comprises an inner buffering ring (512) and an outer buffering ring (513), the inner buffering ring (512) is located on an inner side of the outer buffering ring (513), the at least one third pick-and-place position (514) comprises a third inner pick-and-place position (5122) configured on the inner buffering ring (512) corresponding to the transfer path (300), and a third outer pick-and-place position (5132) configured on the outer buffering ring (513) corresponding to the transfer path (300); and
the reagent container transfer mechanism (52) is configured for transferring a reagent container between one of the first inner pick-and-place position (3122) and the first outer pick-and-place position (3132) and one of the third inner pick-and-place position (5122) and the third outer pick-and-place position (5132), and/or
configured for transferring a reagent container (40) between one of the second inner pick-and-place position (3222) and the second outer pick-and-place position (3232) and one of the third inner pick-and-place position (5122) and the third outer pick-and-place position (5132).

4. The sample analyzer according to claim 3, wherein a first included angle (400) is defined between a line extending through the first inner pick-and-place position (3122) and the first rotation center (315) and another line extending through the first outer pick-and-place position (3132) and the first rotation center (315);
a second included angle (500) is defined between a line extending through the second inner pick-and-place position (3222) and the second rotation center (325) and another line extending through the second outer pick-and-place position (3232) and the second rotation center (325); and
a third included angle (600) is defined between a line extending through the third inner pick-and-place position (5122) and the third rotation center (515) and another line extending through the third outer pick-and-place position (5132) and the third rotation center (515).

5. The sample analyzer according to claim 3, wherein the first inner storage ring (312) is provided with a plurality of first inner carrying positions (3121) for carrying reagent containers (40) along a circumferential direction centered on the first rotation center (315), the first inner storage ring (312) rotates and moves the plurality of first inner carrying positions (3121) to pass through the first inner pick-and-place position (3122) sequentially, the first outer storage ring (313) is provided with a plurality of first outer carrying positions (3131) for carrying reagent containers (40) along the circumferential direction centered on the first rotation center (315), and the first outer storage ring (313) rotates and moves the plurality of first outer carrying positions (3131) to pass through the first outer pick-and-place position (3132) sequentially;
the second inner storage ring (322) is provided with a plurality of second inner carrying positions (3221) for carrying reagent containers (40) along a circumferential direction centered on the second rotation center (325), the second inner storage ring (322) rotates and moves the plurality of second inner carrying positions (3221) to pass through the second inner pick-and-place position (3222) sequentially, the second outer storage ring (323) is provided with a plurality of second outer carrying positions (3231) for carrying reagent containers (40) along the circumferential direction centered on the second rotation center (325), and the second outer storage ring (323) rotates and moves the plurality of second outer carrying positions (3231) to pass through the second outer pick-and-place position (3232) sequentially;
the inner buffering ring (512) is provided with a plurality of third inner carrying positions (5121) for holding reagent containers (40) along a circumferential direction centered on the third rotation center (515), the inner buffering ring (512) rotates and moves the plurality of third inner carrying positions (5121) to pass through the third inner pick-and-place position (5122) sequentially, the outer buffering ring (513) is provided with a plurality of third outer carrying positions (5131) for carrying reagent containers (40) along the circumferential direction centered on the third rotation center (515), and the outer buffering ring (513) rotates and moves the plurality of third outer carrying positions (5131) to pass through the third outer pick-and-place position (5132) sequentially; and
wherein the reagent container transfer mechanism (52) is configured for transferring one of the reagent containers (40) at a time between:
the first inner pick-and-place position (3122) and the third inner pick-and-place position (5122);
the first outer pick-and-place position (3132) and the third inner pick-and-place position (5122);
the first inner pick-and-place position (3122) and the third outer pick-and-place position (5132);
the first outer pick-and-place position (3132) and the third outer pick-and-place position (5132);
the second inner pick-and-place position (3222) and the third inner pick-and-place position (5122);
the second outer pick-and-place position (3232) and the third inner pick-and-place position (5122);
the second inner pick-and-place position (3222) and the third outer pick-and-place position (5132); or
the second outer pick-and-place position (3232) and the third outer pick-and-place position (5132).

6. The sample analyzer according to claim 2, wherein the at least one third pick-and-place position (514) comprises a third left pick-and-place position (5141) located adjacent to the first reagent container storage mechanism (31) and a third right pick-and-place position (5142) located adjacent to the second reagent container storage mechanism (32), and the reagent container transfer mechanism (52) is configured for transferring reagent containers (40) between the at least one first pick-and-place position (314) and the third left pick-and-place position (5141), and between the at least one second pick-and-place position (324) and the third right pick-and-place position (5142).

7. The sample analyzer according to claim 2, wherein a vertical symmetry line (700) is formed passing through the fourth rotation center (21) and perpendicular to the center line (200), the third rotation center (515) is offset from the vertical symmetry line (700) and is positioned adjacent to the first reagent container storage mechanism (31) or adjacent to the second reagent container storage mechanism (32).

8. The sample analyzer according to claim 7, wherein an intersection point of the vertical symmetry line (700) and the center line (200) is located at a midpoint of the center line (200).

9. The sample analyzer according to claim 2, wherein the reagent container transfer mechanism (52) comprises:
a pick-and-place device (521) configured for picking up and placing reagent containers (40);
a rotation driving device (522) configured for driving the pick-and-place device (521) to rotate;
a lifting driving device (523) configured for driving the pick-and-place device (521) to move up and down; and
a horizontally driving device (524) configured for driving the pick-and-place device (521) to move along the transfer path (300) between the at least one first pick-and-place position (314) and the at least one third pick-and-place position (514), and between the at least one second pick-and-place position (324) and the at least one third pick-and-place position (514).

10. The sample analyzer according to claim 9, wherein the pick-and-place device (521) is a gripper; or
the pick-and-place device (521) is a suction nozzle, which is offset from a rotational axis of the rotation driving device (522).

11. The sample analyzer according to claim 2, wherein the first reagent container storage mechanism (31) is provided with a plurality of first carrying positions (311) for carrying reagent containers (40) along a circumferential direction centered on the first rotation center (315), and the first reagent container storage mechanism (31) rotates and moves the plurality of first carrying positions (311) to pass through the at least one first pick-and-place position (314) sequentially;
the second reagent container storage mechanism (32) is provided with a plurality of second carrying positions (321) for holding reagent containers (40) along a circumferential direction centered on the second rotation center (325), and the second reagent container storage mechanism (32) rotates and moves the plurality of second carrying positions (321) to pass through the at least one second pick-and-place position (324) sequentially;
the reagent container buffering mechanism (51) is provided with a plurality of third carrying positions (511) for carrying reagent containers (40) along a circumferential direction centered on the third rotation center (515), and the reagent container buffering mechanism (51) rotates and moves the plurality of third carrying positions (511) to pass through the at least one third pick-and-place position (514) sequentially; and
the reagent container transfer mechanism (52) is configured for transferring one of the reagent containers (40) at a time
between the at least one first pick-and-place position (314) and the at least one third pick-and-place position (514); or
between the at least one second pick-and-place position (324) and the at least one third pick-and-place position (514).

12. The sample analyzer according to claim 1, wherein a horizontal symmetry line (800) is formed passing through the fourth rotation center (21) and parallel to the center line (200);
the sample analyzer further comprises a sample delivery mechanism (70) for conveying sample containers; and
the center line (200) and the sample delivery mechanism (70) are respectively located on two sides of the horizontal symmetry line (800).

13. The sample analyzer according to any one of claims 1 to 12, further comprising a recycling box (60), wherein the recycling box (60) has a recycling opening (61) is located beneath the transfer path (300).

14. The sample analyzer according to claim 13, wherein the recycling opening (61) is located between the first reagent container storage mechanism (31) and the reagent container buffering mechanism (51); or
the recycling opening (61) is located between the second reagent container storage mechanism (32) and the reagent container buffering mechanism (51).

15. The sample analyzer according to any one of claims 1 to 12, wherein the reaction wheel (20) is configured to carry a plurality of reaction vessels and comprises a first reagent dispensing position (22), a second reagent dispensing position (23), a third reagent dispensing position (24), and a fourth reagent dispensing position (25);
the first reagent container storage mechanism (31) is provided with a first reagent aspirating position (316) and a second reagent aspirating position (317);
the second reagent container storage mechanism (32) is provided with a third reagent aspirating position (326) and a fourth reagent aspirating position (327);
the sample analyzer further comprises:
a first reagent injection mechanism (91) comprising a first reagent needle (911) and a second reagent needle that are operated independently, wherein the first reagent needle (911) is configured for drawing a reagent from a corresponding reagent container (40) at the first reagent aspirating position (316), transferring the reagent along the first line (913) and injecting the reagent to a corresponding reaction vessel at the first reagent dispensing position (22) independently from action of the second reagent needle, and the second reagent needle is configured for drawing a reagent from a corresponding reagent container (40) at the second reagent aspirating position (317), transferring the reagent along the second line (914) and injecting the reagent to a corresponding reaction vessel at the second reagent dispensing position (23) independently from action of the first reagent needle (911); and
a second reagent injection mechanism (92) comprising a third reagent needle and a fourth reagent needle that are operated independently, wherein the third reagent needle is configured for drawing a reagent from a corresponding reagent container (40) at the third reagent aspirating position (326), transferring the reagent along the third line (923) and injecting the reagent to a corresponding reaction vessel at the third reagent dispensing position (24) independently from action of the fourth reagent needle, and the fourth reagent needle is configured for drawing a reagent from a corresponding reagent container (40) at the fourth reagent aspirating position (327), transferring the reagent along the fourth line (924) and injecting the reagent to a corresponding reaction vessel at the fourth reagent dispensing position (25) independently from action of the third reagent needle.
